Europäisches Patentamt

European Patent Office

Office européen des brevets

(19)

(11) Numéro de publication: **0 103 339**
**A1**

(12) **DEMANDE DE BREVET EUROPEEN**

(21) Numéro de dépôt: **83201293.4**

(51) Int. Cl.³: **H 04 N 7/16**

(22) Date de dépôt: **07.09.83**

(30) Priorité: **14.09.82  FR 8215533**

(43) Date de publication de la demande: **21.03.84**
**Bulletin 84/12**

(84) Etats contractants désignés: **DE FR GB IT SE**

(71) Demandeur: **La Radiotechnique, 51, rue Carnot, F-92150 Suresnes (FR)**

(72) Inventeur: **Marie, Gérard, Société Civile S.P.I.D. 209 rue de l'Université, F-75007 Paris (FR)**
Inventeur: **Arragon, Jean-Pierre, Société Civile S.P.I.D. 209 rue de l'Université, F-75007 Paris (FR)**

(74) Mandataire: **Landousy, Christian et al, Société Civile S.P.I.D. 209, Rue de l'Université, F-75007 Paris (FR)**

(54) Procédé de brouillage d'images de télévision et dispositif de déchiffrage d'images ainsi brouillées.

(57) Procédé de brouillage d'images de télévision pour lesquelles les signaux vidéo de chaque ligne de balayage sont du type dit M.A.C., c'est-à-dire à multiplexage temporel des composantes analogiques de chrominance et de luminance, caractérisé en ce qu'à l'émission lesdites composantes sont, sur chaque ligne, l'une puis l'autre, chacune fractionnées en deux signaux consécutifs C et D d'une part et F et G d'autre part, dont le premier C ou F est alors retardé de la durée du second et le second D ou G avancé de la durée du premier, les périodes de référence B et E qui précèdent respectivement ces composantes étant exemptées de ce traitement, les positions des points de fractionnement étant déduites de séquences numériques pseudoaléatoires, et ledit traitement étant destiné à être appliqué en sens inverse à la réception pour la restitution simultanée des signaux de luminance Y et de différence de couleur U et V.

0103339

## PROCEDE DE BROUILLAGE D'IMAGES DE TELEVISION ET DISPOSITIF DE DECHIFFRAGE D'IMAGES AINSI BROUILLEES

La présente invention concerne un procédé de brouillage d'images de télévision dans lequel il est prévu, pour les signaux vidéo des lignes de balayage, d'opérer dans les périodes situées entre les périodes de suppression ligne un fractionnement dont la position est définie de façon pseudoaléatoire et un changement de l'ordre des fractions ainsi constituées. Elle concerne également un dispositif de déchiffrement d'images de télévision brouillées selon ce procédé.

La demande de brevet français n° 78 21 888 déposée le 20 juillet 1978 au nom de l'Etablissement Public de Diffusion dit "Télédiffusion de France" et publiée le 15 février 1980 sous le n° 2 431 809 décrit un procédé de brouillage d'images de télévision tel que défini ci-dessus.

Le but de l'invention est de procurer un procédé de brouillage difficile à décrypter pour les sytèmes de transmission de multiplexage temporel de composantes analogiques (dit M.A.C. d'après l'expression anglaise équivalente "Multiplexed Analogue Components") proposés notamment dans le rapport 116/81 - UDC 621.396.946 "Direct television broadcasts by satellite : desirability of a new transmission standard" par K. Lucas et M.D Windram, Independant Broadcasting Authority (IBA), Crawley Court, Winchester, Hants, SO21 - 2QA, ou également, plus récemment, dans l'article "Television systems for D B S" paru dans la revue "The Radio and Electronic Engineer", Vol. 52, n° 7, juillet 1982, p.311 et suivantes. Ce système M.A.C. assure la transmission successive, pour chaque ligne de balayage, des composantes de chrominance et de luminance, séparées par une courte période de référence (dite de clamping) au niveau de noir : un exemple de signal M.A.C. est représenté sur la figure 5 du rapport cité.

L'invention concerne à cet effet un procédé tel que défini précédemment et caractérisé en ce que, pour les systèmes dits M.A.C. de transmission de signaux vidéo du type à multiplexage temporel des composantes analogiques de chrominance et de luminance séparées par une période de référence, lesdites composantes sont à l'émission, dans les périodes situées entre les périodes de suppression ligne, l'une puis l'autre fractionnées chacune en deux signaux consécutifs dont le premier est alors retardé de la durée du second et le second avancé de la durée du premier, les périodes de référence qui séparent ces composantes étant exemptées de ce traitement de fractionnement et de changement d'ordre et ledit traitement étant destiné à être appliqué en sens inverse à la réception.

Le procédé de brouillage ainsi proposé est très efficace, en ce sens qu'il possède les avantages inhérents au procédé décrit dans la demande de brevet citée tout en prévoyant en outre d'exclure du brouillage les périodes de référence situées entre les composantes de chrominance et de luminance, périodes qui, si elles avaient été incluses pour chaque ligne dans la période soumise au brouillage, auraient été assez facilement repérables dans les signaux chiffrés.

Les particularités de cette invention, ainsi définies, vont apparaître de façon plus précise dans la description qui suit et dans les dessins annexés, donnés à titre d'exemple et dans lesquels :

- les figures 1a et 1b représentent respectivement, pour une ligne de balayage, un exemple de signal vidéo de type M.A.C., non brouillé, et ce même signal mais brouillé conformément au procédé selon l'invention ;

- la figure 2 montre un exemple de réalisation d'un dispositif de déchiffrage de signaux vidéo ainsi brouillés.

Le procédé de transmission de signaux M.A.C. prévoit, pour chaque ligne de balayage, comme le montre par exemple la figure 5 déjà citée du rapport IBA, la transmission successive d'un mot de sychronisation ligne, d'une période de référence au niveau zéro de chrominance, du signal de chrominance, d'une période de référence au niveau du noir, et du signal de luminance. Les avantages d'une telle structure de signal apparaissent en page 8, colonne 2, du rapport, et ne seront pas repris ici, le principal d'entre eux étant cependant le caractère successif de la transmission qui entraîne la disparition de l'enchevêtrement des spectres de chrominance et de luminance ; cette imbrication nécessitait en effet des traitements bien connus mais relativement complexes pour la reconstitution de l'image à la réception.

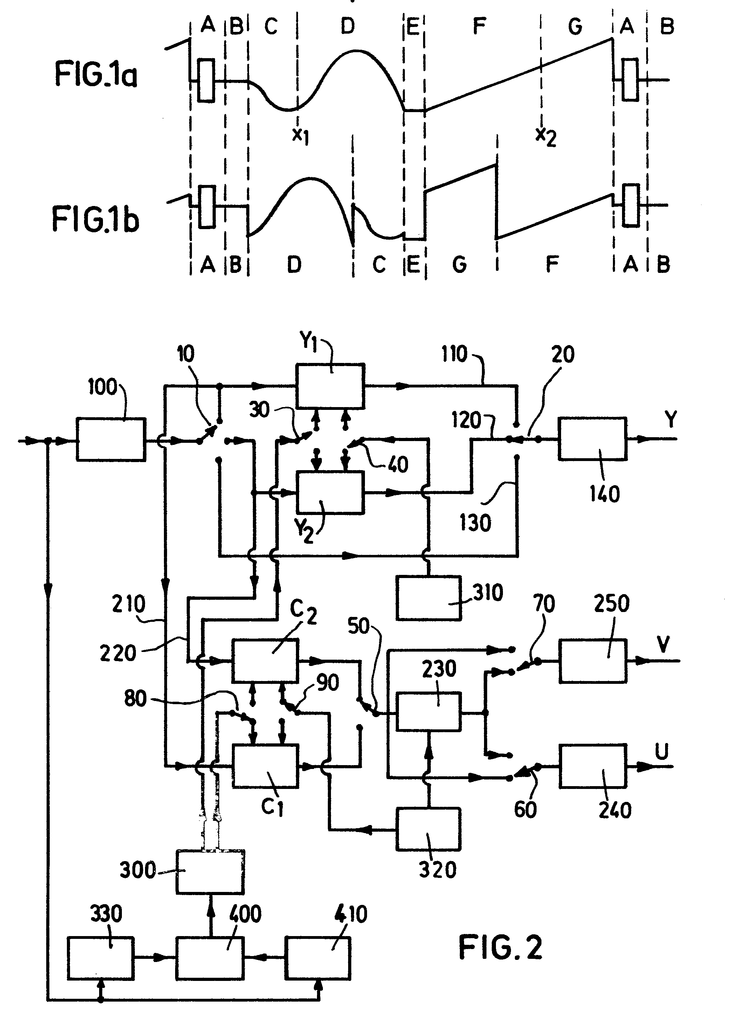

Le procédé de brouillage selon l'invention consiste, à l'émission, à fractionner sur chaque ligne de balayage les deux composantes de chrominance et de luminance, indépendamment l'une de l'autre, chacune en deux signaux consécutifs dont le premier est alors retardé de la durée du second et le second avancé de la durée du premier. Ce procédé est mis en évidence sur la figure 1, où la figure 1a montre le signal vidéo de type M.A.C., non brouillé, pour une ligne de balayage, et la figure 1b ce même signal mais brouillé : par rapport au signal non brouillé composé du mot de synchronisation A, des périodes de référence B et E, du signal de chrominance CD et du signal de luminance FG (ces deux derniers signaux étant représentés avec des formes quelconques, bien distinctes pour la compréhension du traitement effectué), le signal brouillé est donc transmis selon la séquence ABDCEGF, qui n'affecte pas la période de référence E. Le traitement à la réception consiste alors à assurer le rétablissement des séquences d'origine, pour la reconstitution en clair des composantes de chrominance et de luminance de la ligne de balayage considérée.

Cette reconstitution est possible par exemple à l'aide du dispositif de déchiffrage représenté sur la figure 2 et qui comprend les éléments essentiels d'un décodeur classique numérique de signaux vidéo de type M.A.C. auxquels sont associés, selon l'invention, une modification du compteur d'adressage écriture des mémoires, un générateur de séquences numériques pseudoaléatoires et, pour la commande de ce dernier, un circuit de contrôle d'accès. Plus précisément, ce dispositif de déchiffrage est composé des éléments suivants :

0103339

(1) des circuits d'entrée :

(a) un convertisseur analogique-numérique 100 qui reçoit les signaux M.A.C. brouillés ;

(b) un commutateur 10 à trois sorties ;

(2) des circuits de traitement de la composante de luminance :

(c) un ensemble de trois voies en parallèle 110, 120, 130, qui relient les trois sorties de ce commutateur 10 aux trois entrées d'un commutateur 20, les première et deuxième voies 110 et 120 comprenant respectivement une première et une deuxième mémoire $Y_1$ et $Y_2$ de stockage de la composante de luminance, adressées alternativement par un compteur d'écriture 300 et un premier compteur de lecture 310, alors que la troisième voie 130 est une voie directe ;

(d) un premier convertisseur numérique-analogique 140 qui reçoit la sortie du commutateur 20 et délivre le signal de luminance couramment appelé Y ;

(3) des circuits de traitement de la composante de chrominance :

(e) un ensemble de deux voies en parallèle 210 et 220 qui, par l'intermédiaire d'une troisième et d'une quatrième mémoire $C_1$ et $C_2$ de stockage de la composante de chrominance adressées alternativement par le compteur d'écriture 300 et un deuxième compteur de lecture 320, sont reliées respectivement aux deux entrées d'un commutateur 50, la sortie de ce commutateur étant reliée d'une part à l'entrée d'une ligne à retard numérique 230 commandée par le compteur de lecture 320 (et réalisée par exemple sous forme d'un registre à décalage) pour retarder de la durée d'une ligne la composante de chrominance, et d'autre part à la première entrée respectivement d'un commutateur 60 et d'un commutateur 70 dont l'autre entrée reçoit la sortie de ladite ligne à retard ;

(f) des deuxième et troisième convertisseurs numériques-analogiques 240 et 250 qui reçoivent la sortie des commutateurs 60 et 70 respectivement et délivrent les signaux de différence de couleur couramment appelés U et V ;

(4) des circuits de commande de déchiffrage :

(g) un compteur 330 des lignes à l'intérieur de chaque trame ;

(h) un générateur de séquences numériques pseudoaléatoires 400 synchronisé par l'intermédiaire du compteur de lignes 330 ;

(i) un circuit de contrôle d'accès 410 qui fournit au générateur de séquences pseudoaléatoires un mot de départ constituant la clé de chiffrage.

Le fonctionnement du dispositif de déchiffrage ainsi composé est le suivant. Le générateur de séquences pseudoaléatoires 400, qui est synchronisé par le compteur 330 et qui reçoit du circuit de contrôle d'accès 410 la clé déchiffrée par celui-ci dès la réception des signaux M.A.C. brouillés, génère un mot numérique aléatoire dont on déduit les deux abscisses $x_1$ et $x_2$ des points de fractionnement des composantes analogiques de chrominance et de luminance, obtenus lors du brouillage à l'émission. Dès lors, à la réception des signaux, on écrit la période B en début de mémoire, puis la fraction D, en commençant à l'adresse de l'abscisse $x_1$, et la fraction C entre B et D; cette écriture est effectuée successivement dans la mémoire $C_1$ ou la mémoire $C_2$ suivant la parité de la ligne, à l'aide du compteur d'écriture 300 commandé par le générateur de séquences pseudoaléatoires 400 et adressant l'une ou l'autre des deux mémoires en fonction de la position d'un commutateur 80.

L'écriture de la composante de chrominance étant achevée, on écrit de même, successivement dans la mémoire $Y_1$ ou la mémoire $Y_2$ suivant la parité de la ligne et à l'aide du même compteur d'écriture 300 qui adresse l'une ou l'autre de ces deux mémoires en fonction de la position d'un commutateur 30, la période de référence E en début de mémoire, puis la fraction G en commençant à l'adresse de l'abscisse $x_2$, et la fraction F entre E et G.

Enfin, pour restituer les signaux luminance et chrominance, on relit simultanément dans l'ordre croissant des adresses les mémoires $Y_1$ et $C_1$, ou $Y_2$ et $C_2$, à l'aide des compteurs

0103339

310 et 320. Les fréquences de lecture des mémoires luminance et chrominance sont choisies de telle sorte que les signaux utiles FG et CD sont restitués en un temps correspondant au temps de balayage utile de la ligne, soit 52 microsecondes environ dans le standard européen actuel 625 lignes. La fréquence de lecture chrominance est donc inférieure à la fréquence de lecture luminance qui elle-même est inférieure à la fréquence d'écriture du compteur 300. Le compteur de lecture 320 adresse les mémoires $C_1$ et $C_2$ alternativement par l'intermédiaire d'un commutateur 90, et le compteur 310 les mémoires $Y_1$ et $Y_2$ alternativement par l'intermédiaire d'un commutateur 40.

On notera ici que les neuf commutateurs 10 à 90 sont commandés par le compteur 330, mais ces liaisons de commande ne sont pas représentées, afin de ne pas surcharger la figure 2.

La présence de la ligne à retard numérique 230 n'est pas liée au déchiffrage lui-même ; cette ligne à retard est prévue pour permettre la restitution simultanée, en sortie des convertisseurs numériques-analogiques 240 et 250, des signaux de différence de couleur U et V qui sont transmis alternativement. La commande de cette ligne à retard 230 est assurée par le compteur de lecture 320 des mémoires $C_1$ et $C_2$.

Comme dans la demande de brevet citée, et dans le but d'éliminer les défauts qui peuvent résulter du fractionnement des composantes de chrominance et de luminance, on aura intérêt à répéter à la fin des fractions C et F une courte partie du début des fractions D et G respectivement. Pour que la durée du signal transmis reste inchangée, il faudra alors supprimer à la fin des signaux D et G deux parties de signal de durées égales respectivement à celles des parties répétées.

REVENDICATIONS :

1.        Procédé de brouillage d'images de télévision dans lequel il est prévu, pour les signaux vidéo des lignes de balayage, d'opérer dans les périodes situées entre les périodes de suppression ligne un fractionnement dont la position est définie de façon pseudoaléatoire et un changement de l'ordre des fractions ainsi constituées, caractérisé en ce que, pour les systèmes dits M.A.C. de transmission de signaux vidéo du type à multiplexage temporel des composantes analogiques de chrominance et de luminance séparées par une période de référence, lesdites composantes sont à l'émission, dans les périodes situées entre les périodes de suppression ligne, l'une puis l'autre fractionnées chacune en deux signaux consécutifs (C,D) et (F,G) dont le premier (C) ou (F) est alors retardé de la durée du second et le second (D) ou (G) avancé de la durée du premier, les périodes de référence (E) qui séparent ces composantes étant exemptées de ce traitement de fractionnement et de changement d'ordre et ledit traitement étant destiné à être appliqué en sens inverse à la réception.

2.        Dispositif de déchiffrement d'images de télévision brouillées selon le procédé de la revendication 1, caractérisé en ce qu'il comprend des moyens pour opérer ledit traitement inverse de restitution des séquences d'origine des fractions des composantes de chrominance et de luminance, sans modifier la position des périodes de référence (E) qui séparent ces composantes.

3.        Dispositif selon la revendication 2, caractérisé en ce qu'il est composé des éléments suivants :

(1) des circuits d'entrée comprenant eux-mêmes :

(a) un convertisseur analogique-numérique qui reçoit en entrée les signaux M.A.C. brouillés ;

(b) un premier commutateur à trois sorties ;

(2) des circuits de traitement de la composante de luminance, comprenant :

(c) un ensemble de trois voies en parallèle qui relient les trois sorties du premier commutateur aux trois entrées d'un second commutateur, les première et deuxième voies comprenant respectivement une première et une deuxième mémoire de stockage de la composante de luminance adressées alternativement par un compteur d'écriture et un premier compteur de lecture, alors que la troisième voie est une voie directe ;

(d) un premier convertisseur numérique-analogique qui reçoit la sortie du deuxième commutateur et délivre le signal de luminance Y ;

(3) des circuits de traitement de la composante de chrominance, comprenant :

(e) un ensemble de deux voies en parallèle et qui, par l'intermédiaire d'une troisième et d'une quatrième mémoire de stockage de la composante de chrominance adressées alternativement par le compteur d'écriture et un deuxième compteur de lecture, sont reliées respectivement aux deux entrées d'un commutateur dit cinquième, la sortie de ce cinquième commutateur étant reliée d'une part à l'entrée d'une ligne à retard numérique, commandée par le deuxième compteur de lecture pour retarder de la durée d'une ligne la composante de chrominance, et d'autre part à la première entrée respectivement d'un sixième commutateur et d'un septième commutateur dont l'autre entrée reçoit la sortie de ladite ligne à retard ;

(f) des deuxième et troisième convertisseurs numériques-analogiques qui reçoivent la sortie des sixième et septième commutateurs respectivement et délivrent les signaux de différence de couleur U et V ;

(4) des circuits de commande de déchiffrage, comprenant :

(g) un compteur des lignes à l'intérieur de chaque trame ;

(h) un générateur de séquences numériques pseudoaléatoires synchronisé par l'intermédiaire de ce compteur de lignes ;

(i) un circuit de contrôle d'accès qui fournit au générateur de séquences pseudoaléatoires un mot de départ constituant la clé de chiffrage,

et caractérisé en ce que le compteur d'écriture est prévu pour

0103339

adresser les mémoires en fonction des abscisses des points de fractionnement des composantes de chrominance et de luminance, ces abscisses étant déduites des séquences numériques pseudoaléatoires fournies par ledit générateur.

0103339

1/1

FIG.1a

FIG.1b

FIG.2

PHF 82-571

# Office européen des brevets

## RAPPORT DE RECHERCHE EUROPEENNE

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| D,A | FR-A-2 431 809 (TDF et al.) (15-02-1980) * Page 2, lignes 6-17; figures 1-2 * | 1 | H 04 N 7/16 |

DOMAINES TECHNIQUES RECHERCHES (Int. Cl. ³)

H 04 N

Le présent rapport de recherche a été établi pour toutes les revendications

| Lieu de la recherche | Date d'achèvement de la recherche | Examinateur |
|---|---|---|
| LA HAYE | 28-11-1983 | BEINDORFF W.H. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

 

& : membre de la même famille, document correspondant

OEB Form 1503. 03.82